Europäisches Patentamt

European Patent Office

Office européen des brevets

(11) Publication number: 0 468 369 A2

# EUROPEAN PATENT APPLICATION

(21) Application number: 91112029.3

(22) Date of filing: 18.07.91

(51) Int. Cl.5: G01M 1/02

(30) Priority: 27.07.90 IT 720990

(43) Date of publication of application:
29.01.92 Bulletin 92/05

(84) Designated Contracting States:
AT BE CH DE DK ES FR GB GR IT LI LU NL SE

(71) Applicant: Buzzi, Carlo
Strada Statale 129/A
I-22054 Mandello del Lario (Como)(IT)

(72) Inventor: Buzzi, Carlo
Strada Statale 129/A
I-22054 Mandello del Lario (Como)(IT)

(74) Representative: Modiano, Guido et al
MODIANO, JOSIF, PISANTY & STAUB
Modiano & Associati Via Meravigli, 16
I-20123 Milano(IT)

(54) Automatic unit for setting the dimensional data of a wheel on a wheel balancing machine.

(57) An automatic unit for setting the dimensional data of a wheel on a wheel balancing machine which comprises a wheel supporting flange which is supported by a shaft which protrudes from a reference plane of the balancing machine. The peculiarity of the invention resides in that it includes a gauge (10) which protrudes from the reference plane and can engage the inner edge of the wheel. Means (20-21-22) for measuring the translatory motion of the gauge, which determines the distance between the reference plane and the inner edge of the wheel, and means (30,32,33,34,35) for measuring the rotation of the gauge, which determines the diameter of the wheel, are operatively associated with the gauge.

FIG.2

The present invention relates to an automatic unit for setting the dimensional data of a wheel on a wheel balancing machine.

As is known, in force-measurement wheel balancing machines it is necessary to set the imbalance correction radius and the positions of the correction planes with respect to the balancing machine, so that the computing unit with which the balancing machine is provided can obtain the parameters sufficient to provide the adjusted values of the imbalance which is related to each correction plane.

Balancing machines of this type have already been used on the market for some time; in these devices, the measurements required for adjustment are usually set manually by means of pushbutton potentiometers after the operator has determined said measurements by means of appropriate manual gauges.

Balancing machines provided with an automatic gauge, which is capable of detecting, by means of a linear potentiometer or of another similar measurement device, the distance between the wheel and the reference plane of the balancing machine, are also known.

Other known devices have gauges which perform the measurement on the outer part of the wheel, i.e. the wheel part which is opposite with respect to the reference plane of the balancing machine; said devices thus measure the diameter of the wheel.

Combined devices are also known which first measure the distance between the wheel and the reference plane by means of a first gauge and then, in a second generally manual operation, by means of a second gauge, measure both the width of the wheel and its diameter.

By means of two manual operations it is therefore possible to obtain all the measurements required for the adjustment of the balancing machine.

These types of device have apparent disadvantages: firstly, two distinct operations must be performed to set the adjustment data; secondly, the rod of the second gauge which acts externally must have a considerable length, in view of the normal dimensions of the wheel, and is therefore relatively delicate and subject to bending and breakage, as well as to measurement inaccuracies due to the unavoidable mechanical plays.

The above mentioned known devices are described for example in the following patents: US 3741016 - GB 2130386 - GB 2139772.

The aim of the invention is indeed to eliminate the above disadvantages by providing an automatic unit for setting the dimensional data of a wheel on a wheel balancing machine, which allows to detect all the adjustment data by means of a single measurement element which acts on the internal side of the wheel, i.e. on the side of the wheel which is directed toward the reference plane of the balancing machine.

Within the scope of the above aim, a particular object of the invention is to provide an automatic unit which allows to detect, by means of a single operation, all the items required to set the adjustment data, i.e. all the measurements related to the wheel, such as its distance from the reference plane, its diameter and its width.

Another object of the present invention is to provide an automatic unit which allows to drastically simplify all the adjustment operations of the balancing machine, furthermore reducing the required time.

Not least object of the present invention is to provide an automatic unit for setting the dimensional data of a wheel on a wheel balancing machine which, by virtue of its peculiar characteristics of execution, is capable of giving the greatest assurances of reliability and safety in use.

This aim, these objects and others which will become apparent hereinafter are achieved by an automatic unit for setting the dimensional data of a wheel on a wheel balancing machine comprising a wheel supporting flange which is supported by a shaft which protrudes from a reference plane of the balancing machine, characterized in that it comprises a gauge which protrudes from said reference plane and can engage the inner edge of the wheel, means for measuring the translatary motion of said gauge, which determines the distance between the reference plane and the inner edge of the wheel, and means for measuring the rotation of said gauge, which determines the diameter of said wheel, being operatively associated with said gauge.

Further characteristics and advantages will become apparent from the description of a preferred but not exclusive embodiment of an automatic unit for setting the dimensional data of a wheel on a wheel balancing machine, illustrated only by way of non-limitative example in the accompanying drawings, wherein:

figure 1 is a schematic view of a balancing machine to which the automatic unit according to the invention is applied;

figure 2 is a schematic view of an embodiment of the gauge;

figure 3 is a view of the gauge rotation detection means, which are constituted, by way of example, by a key.

With reference to the above figures, the automatic unit for setting the dimensional data of a wheel on a wheel balancing machine, according to the invention, comprises a flange 1 to which the supporting plane 2 of a wheel can be connected; said supporting plane also corresponds to the plane on which the wheel rests on the hub of the vehicle.

The supporting flange 1 is supported by a shaft 4 which protrudes from the reference plane 5 of a balancing machine, which is generally indicated by the reference numeral 6.

A gauge, generally indicated by the reference numeral 10, protrudes from the reference plane 5, proximate to the region where the shaft 4 is provided, and can be engaged with the inner edge of the wheel 3.

The gauge 10 has the peculiarity of allowing to measure its translatory motion, in order to determine the distance between the reference plane and the inner edge of the wheel, as well as to measure its rotation, in order to determine the diameter of the wheel.

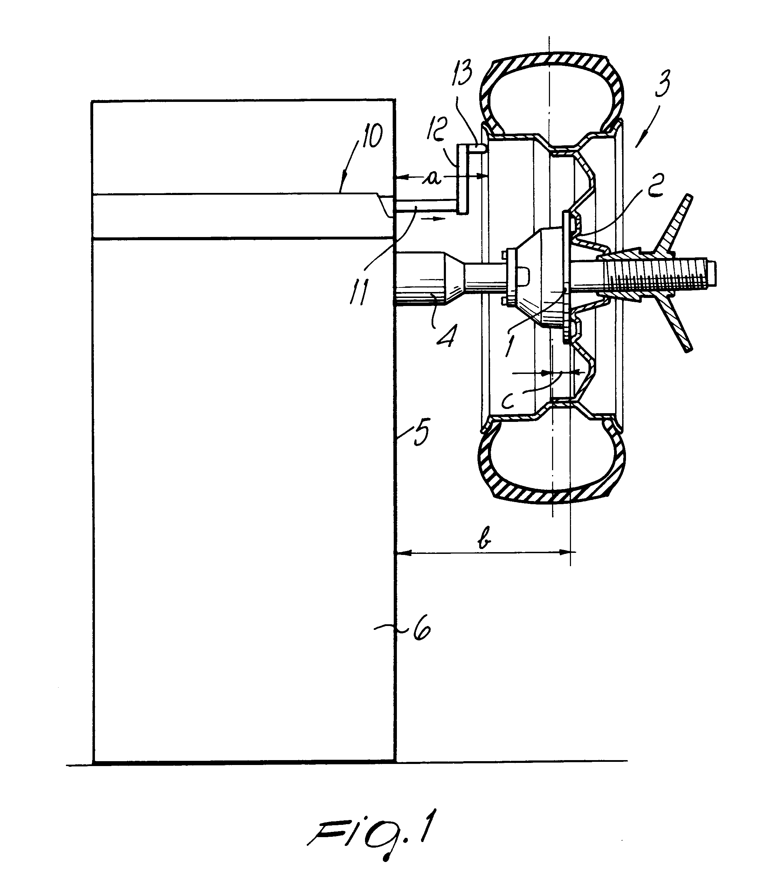

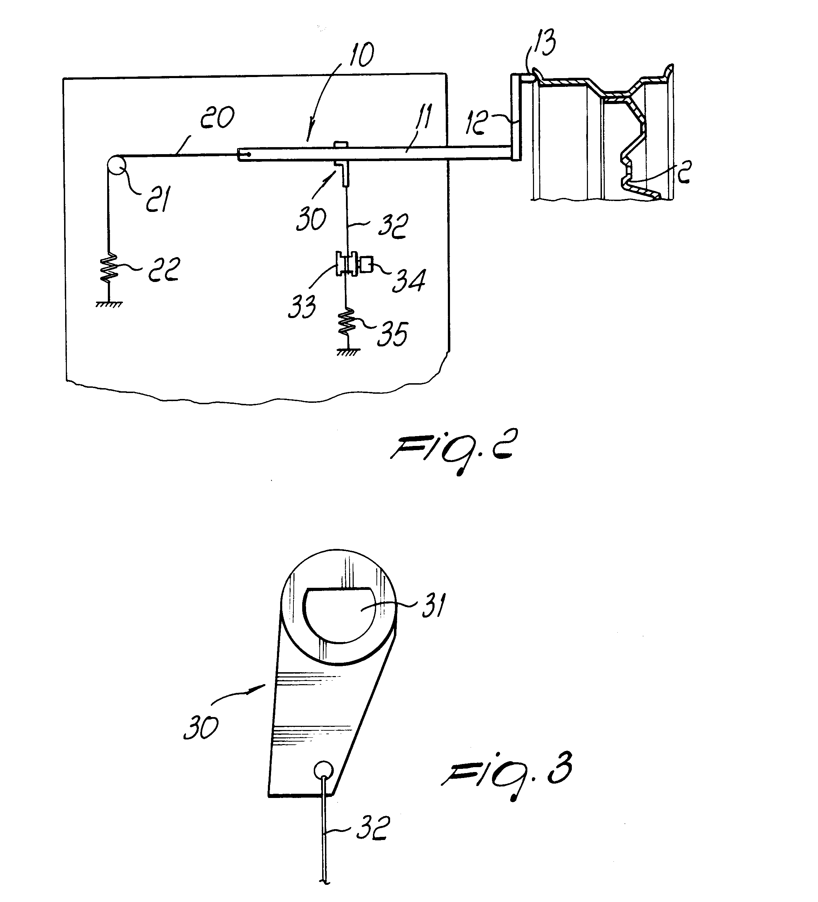

More in detail, as illustrated in figure 2, the gauge 10 has a stem 11 which is slidingly and rotatably supported by the balancing machine 6 and protrudes perpendicular from the reference plane 5.

At its outer end, the stem 11 is associated with a perpendicular, or radial, arm 12 which ends with a probe 13 which is adapted to engage the inner edge of said wheel.

The translatory motion of the stem 11 along its own axis determines the distance between the wheel and the reference plane; means for measuring said translatory motion are provided for this purpose and are for example constituted by a first flexible cable 20 which winds around a first pulley 21 which is operatively associated with a potentiometer which, according to the rotation of said pulley, detects the axial movement of the stem 11.

A first return spring 22 which is connected to a fixed point is advantageously associated with the flexible element at the end which is opposite to the end connected to the stem 11.

The axial translatory motion of the stem 11, which as mentioned determines the distance between the reference plane and the wheel, can thus be detected by the potentiometer which is associated with the pulley 21.

As previously mentioned, the stem 11 is rotated about its own axis by virtue of the presence of the radial arm 12 which supports the probe 13.

Each different rotation of the stem 11 substantially corresponds to different diameters of the wheel, i.e. there is a direct relation between the diameter of the wheel and the rotation of the gauge.

This detection, which from a purely mathematical point of view can be performed simply by means of trigonometric calculations, can be performed with the device illustrated in figures 2 or 3. Said device comprises a key 30 which defines a hole 31 which is shaped so that the key 30 is rigidly rotationally associated with the stem 11, although it allows the translatory motion of the stem 11 with respect to said key.

A second flexible cable 32 is connected to the key 30 and winds on a pulley 33 which is associated with a second potentiometer 34.

The potentiometer 34 is thus rotated simultaneously with the rod of the gauge.

In this case too, there is a second return spring 35 which is connected between a fixed point and the end of the flexible cable which is opposite to the end for connection to the key 30.

The measurement which is performed by the second potentiometer 34 is univocally related to the angle by which the rod of the gauge is rotated.

The correlation between the diameter of the wheel rim and the value measured on the potentiometer can be performed simply in practice, by detecting, during the adjustment of the machine, the values measured by the potentiometer which detects rotation correspondingly with respect to the diameters of various rims. Once a correlation table has been established and stored in the computer of the balancing machine, it is apparent that the computer of the balancing machine can determine the diameter of the rim which corresponds to a certain value of the rotation angle of the gauge.

The measurement of the width of the wheel is obtained indirectly by using an average measurement of the camber c of the rim, which is defined as the distance between the centerline of the wheel and the supporting plane of the wheel on the hub of the vehicle or on the balancing flange.

The camber is usually provided by the maker of the wheel and is generally correlated to the diameter of the rim.

If the distance a between the reference plane and the wheel and the distance b between the flange and the reference plane, which is a fixed value for the balancing machine, are known, it is possible to measure the width of the rim, since it is equal to twice the distance c minus the values a and b, i.e. the distance of the rim from the reference plane and the camber.

In this manner, without performing any physical measurement, it is possible to obtain the width of the tire, and the need for a gauge arranged on the outside of the wheel and for a measurement by means of said gauge is thus eliminated.

It is possible to store in the computer unit of the balancing machine the statistical average values of the camber of the wheels as a function of the diameter of their rims; this table is compiled simply by using the data supplied by wheel manufacturers.

Alternatively, the camber parameters can be classified with a correlation both to the diameter of the wheel and to the distance of the machine, in order to make a more accurate camber measurement.

From what has been described above it can thus be seen that the invention achieves the intended aim and objects, and in particular the fact is stressed that an automatic unit for setting the dimensional data of a wheel on a wheel balancing machine is provided which allows to automatically set all the data on the balancing machine by performing a single measurement by means of a gauge which operates on the inner face of the wheel, i.e. on the face which is directed toward the reference plane.

The automatic unit according to the invention is susceptible to numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Automatic unit for setting the dimensional data of a wheel (3) on a wheel balancing machine (6), comprising a wheel supporting flange (1) which is supported by a shaft (4) which protrudes from a reference plane (5) of the balancing machine, characterized in that it comprises a gauge (10) which protrudes from said reference plane and can engage the inner edge of the wheel, means (20,21,22) for measuring the translatory motion of said gauge, which determines the distance between the reference plane and the inner edge of the wheel, and means (30,32,33,34,35) for measuring the rotation of said gauge, which determines the diameter of said wheel, being operatively associated with said gauge.

2. Automatic unit according to claim 1, characterized in that said gauge comprises a stem (11) which is slidably and rotatably supported with respect to said reference plane (5), said stem having, at its free end, a radial arm (12) which ends with a probe (13) which engages said inner edge of the wheel.

3. Automatic unit, according to one or more of the preceding claims, characterized in that said means for measuring the translatory motion of said gauge are constituted by a first flexible cable (20) which is associated with the end of said stem (11) and winds on a first pulley (21) which is connected to a translatory motion detection potentiometer, said flexible cable being connected to a fixed point with the interposition of a first return spring (22).

4. Automatic unit according to the preceding claims, characterized in that said means for measuring the rotation of said gauge are constituted by a key (30) which is rigidly rotationally associated with said stem and slidingly engages therewith, a second flexible cable (32) being associated with said key and being connected to a second pulley (33) which is associated with a second potentiometer (34) which is adapted to detect the rotation of the pulley correlated to the rotation of said stem, said second flexible cable being associated with a fixed point with the interposition of a second return spring (35).

5. Automatic unit, according to one or more of the preceding claims, characterized in that the width of the wheel is determined as twice the difference between the distance of said supporting flange and the reference plane, from which the camber of the rim and the distance between said reference plane and the wheel edge are subtracted.

6. Automatic unit, according to one or more of the preceding claims, characterized in that the camber data are set in a table which can be accessed by the computer unit of the balancing machine, which correlates the camber with the diameter of the wheel.

7. Automatic unit, according to one or more of the preceding claims, characterized in that it comprises a table which correlates the camber with the diameter of the rim and the distance of the rim from the balancing machine.

Fig.1

Fig. 2

Fig. 3